# EUROPEAN PATENT APPLICATION

(11) **EP 0 550 787 A1**
(43) Date of publication of application: **14.07.1993**
(21) Application number: 92100298.6
(22) Date of filing: 09.01.1992
(51) Int. Cl.: A23L 3/44, A23L 3/015, A23B 4/037, A23B 7/024, A23B 5/03

(54) **Production of dried foods**

(71) Applicant: WELLSUN CO., LTD., Hachioji-shi, Tokyo 193 (JP)
(72) Inventor: Suzuki, Yoshitaka, Hachioji-shi, Tokyo 192 (JP)
(74) Representative: Grünecker, Kinkeldey, Stockmair & Schwanhäusser Anwaltssozietät

(57) **Abstract**

A method for producing dried food products capable of returning rapidly to a hydrous, fresh state comprises the steps of sorting out cleaned feed material in such a manner that it comes within a given shape and size well fit for processing, further cleaning the thus sorted-out feed material, if required, bringing said cleaned feed material into contact with liquefied air or nitrogen for instantaneous freezing, exposing the thus frozen material to an air pressure of at least 300 megapascals in a pressure-resistant, closed vessel, and holding the thus pressurized, frozen material to dryness in vacuo. The obtained food products - which can be rapidly reconstituted with water while the nutrients, smell and taste inherent in the raw materials are kept intact - can be used as such in the form of convenient foods and as materials for preparing a variety of processed foods.

## Description

### BACKGROUND OF THE INVENTION

### Field of the Invention

The present invention relates generally to producing dried food products which can stand up to long-term storage without causing denaturation or deprivation of the nutrients contained therein or having any detrimental effect on the original smell or taste thereof and, more particularly, to producing dried food products which can be reconsitituted with water in a short time, while the original flavor thereof is kept intact.

### Statement of the Prior Art

So far, there have been known some techniques for enhancing the shelf stability of foods by decreasing their water content. Reducing the water content of foods, for instance, may be achieved by bringing them in contact with air of low humidity for moisture evaporation or heating foods to a temperature at which no change takes place in their quality to promote the evaporation of moisture. This may also be achieved by placing foods in an atmosphere of reduced pressure, while they are maintained at low temperature, thereby evaporating moisture, or by freezing foods and then placing them in an atmosphere of reduced pressure, thereby evaporating the moisture of the as-frozen foods.

Of these techniques, the first-mentioned technique - wherein food products are brought into contact with air of low humidity for drying - presents a problem that the rate of drying is so slow that they suffer oxidation by air or are deprived of volatile components, resulting in deterioration. Another problem is that contaminants contained in the drying air are likely to be deposited onto foods or to cause the propagation of bacteria, etc.

The technique - wherein foods are heated for drying - enables the time span needed for drying to be reduced, but offers a problem that due to considerable deprivation of volatile components, irreversible quality changes are likely to occur.

In the case of the techniques wherein foods are evaporated under reduced pressure while they are held at low temperature or foods are first frozen and then evaporated under reduced pressure, such deterioration as mentioned above is comparatively less likely to occur. However, a problem with these technique is that it takes much time for the dried products to return to the original state through contact with water, and deterioration is likely to occur in the process of water absorption.

### SUMMARY OF THE INVENTION

It is therefore an object of this invention to provide an improved method for producing dried food products, which enable them to absorb water in a short time without incurring such deterioration as deprivation of nutrients or smell and taste, and return rapidly to the original state.

More specifically, this object is achieved by the provision of a method for producing dried food products capable of returning rapidly to a hydrous, fresh state, which comprises the steps of:
sorting out cleaned feed material in such a manner that it comes within a given shape and size well fit for processing,
further cleaning the thus sorted-out feed material, if required,
bringing said cleaned feed material into contact with liquefied air or nitrogen for instantaneous freezing,
exposing the thus frozen material to an air pressure of at least 300 megapascals in a pressure-resistant, closed vessel, and
holding the thus pressurized, frozen material to dryness in vacuo.

### BRIEF DESCRIPTION OF THE DRAWINGS

The above-mentioned and other objects and features of this invention and the manner of attaining them will become apparent, and the invention itself will be best understood by reference to the following description of the embodiment of the invention in conjunction with the accompanying drawings, in which:
FIGURES 1(a) and 1(b) are diagrammatical sketches illustrating the step of cleaning feed material.
FIGURE 2 is a schematic diagram illustrating the instantaneous freezing step,
FIGURE 3 is a diagrammatical sketch illustrating the high-pressure sterilizing step, and
FIGURE 4 is a schematic diagram illustrating the freeze-drying step.

### ILLUSTRATIVE EXPLANATION OF THE INVENTION

The method according to this invention is applicable not only to vegetable food materials including such rootcrops as potatoes, sweet potatoes, taros, turnips, carrots, gingers, onions and Welsh onions; such green vegetables as spinach, celery, paraleies, cabbages, broccoli and asparagus; such fruit vegetables as tomatoes, pumpkins, cucumbers, eggplants and lemons; such cereals as soybeans, green soybeans, pease and corn and such fruits as papayas, mangoes, melons, pineapples, bananas, kiwis, strawberries, guava, pears, apples, oranges and plums, but also to animal food materials including such meat as beef, pork, mutton, chicken, fish and shellfish meat. In the present disclosure, these raw food materials will now be called the "feed material". The feed material may be in a fresh or uncooked state, or may have been cooked as by steaming or boiling. In addition, it may have been seasoned or otherwise processed as by addition of sugar, vinegar, salt and other spice.

Prior to being processed with the present method, the feed material should be cleaned as by washing with water, and preferably sorted to remove the disfigured. Detection of bruises or rots may be achieved by visual inspection of the feed material being carried on a belt conveyor to remove the disfigured manually, as conventionally performed in the art. However, this operation may be performed with an automated system wherein the feed material being carried on a belt conveyor are scanned by an image scanner to compare the output signals with the shape and size of bruises pre-stored in a computer, thereby determining whether they come up to the standard and removing the substandard automatically.

The feed material is required to be sorted out in such a manner that it comes within a given shape and size range well fit for processing. In some cases, however, the feed material may be sorted out as by cutting, pulverizing and sieving.

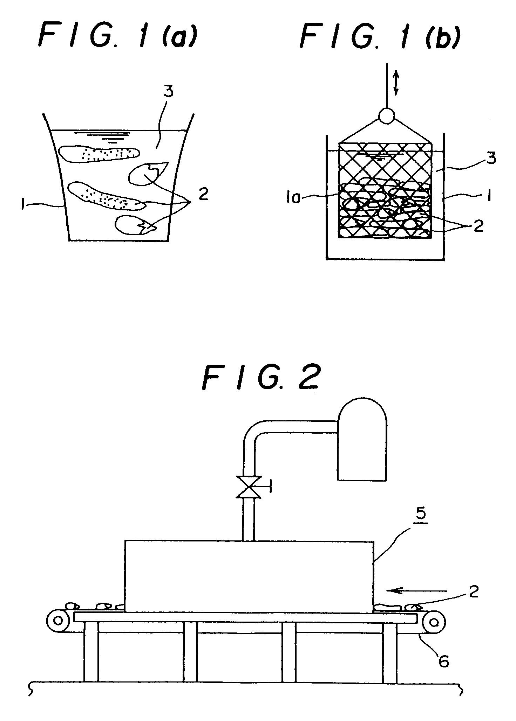

The thus sorted-out feed material is cleaned as by washing with water, if required. For instance, the vegetables, like vegetables shown at 2 in Fig. 1a, may be processed by stirring them in a pool 3 of water filled in a washing tank 1. In this case, it is preferable to use a basket 1a formed of stainless steel wire netting, as shown in in Fig. 1b. If this basket 1a with the vegetables 2 packed in it is vertically shaken in the washing tank 1, it is then possible to facilitate transfer of the feed material to the next step.

In order to reduce the cleaning time, an ultrasonic oscillator may be attached to the washing tank.

While the feed material has been described as cleaned in a batchwise manner, it may be cleaned in a continuous manner. For instance, this may be achieved by moving the feed material in concurrently or countercurrently with respect to water flowing through a conduit pipe in one direction, or by applying showers of water to the feed material - which is being carried on a conveyor belt - from above or sideways.

The water used at this cleaning step must have been cleaned in itself. For instance, use may be made of water sterilized by the application of heating, high pressure or radiations, and water sterilized as by ultrafiltration or reverse osmosis as well.

The thus cleaned feed material 2 is then guided into an instantaneous freezer unit 5 by way of a belt conveyor 6, as illustrated in Fig. 2. Suitably, this belt conveyor 6 operates at a speed of 1/3 to 1/4 m/sec. At too low a speed, there is an increase in the amount of liquefied gas needed for freezing with a throughput reduction. At too high a speed, by contrast, there is possibility that the feed material 2 may fall from the conveyor belt 6. In addition, it is required to increase the length of a tunnel through the instantaneous freezer 5, thus incurring some extra expense for plant investment.

A liquefied gas of very low temperature such as liquefied nitrogen is supplied to the central region of the tunnel through the freezer 5, and is then blown onto the feed material 2 on the conveyor belt 6, so that it is instantaneously frozen without giving rise to any structural change in the tissue, and the cells and fibers contained therein as well.

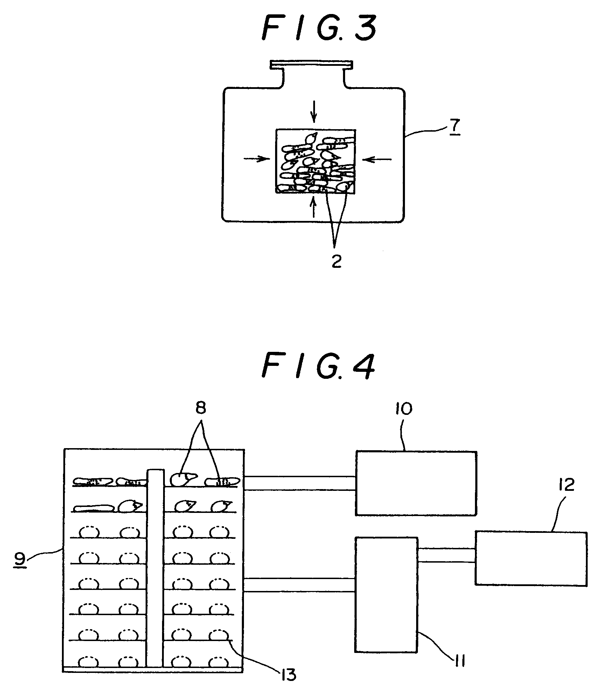

The thus frozen feed material 2 is then packed in an air-permeable basket, as an example, which is in turn delivered into a high-pressure sterilizer unit 7 comprising a closable vessel of high pressure resistance and a high-pressure air feeder. The frozen feed material 2 confined in the unit 7 of high pressure resistance, as illustrated in Fig. 3, is exposed to air of high pressure supplied therein, and is held at a pressure of at least 300 megapascals, preferably 400-800 megapascals for about 10-15 minutes, whereby all the cells inclusive of microorganisms, contained in the feed material, are deactivated.

Such cellular deactivation as achieved by high pressure treatments, i.e., sterilization gives rise to no adverse influence on the nutrients contained in the feed material 2 or the smell and taste thereof, and is not detrimental to the flavor thereof. However, if other sterilization means such as heating is applied, the feed material will denature severely and lose its own flavor, because a considerable length of sterilization time is needed.

The feed material 8 thus pressurized in a frozen state is subsequently placed on shelves 12 in a freeze-drying unit 9, as shown in Fig. 4, and is rapidly deprived of moisture alone through vaporization, while evacuated to 0.1 to 0.3 Torr by means of a vacuum pump 10. In the meantime, it is desired that a freezer 11 be actuated to keep the unit 9 frozen.

Desirously, the freeze-dried feed material should retain its own shape. However, for instance, slices of lemons, mushrooms, carrots and pickles, small fruits or fish egg granules should preferably be immediately wet-packaged before they absorb atmospheric moisture in excess. However, some food material - which is not required to retain its own shape and is used as the material for obtaining cooked foods - may be pulverized to a suitable particle size by a pulverizer after freeze-drying. For instance, green vegetables, if pulverized to a diameter of about 10 mm to eliminate their bulkiness, would substantially remove difficulty in packaging or transportion. Some food material, if scheduled to be processed into mashed or pasted foods, would be desired to be pulverized to a smaller diameter. However, the dried food product according to this invention can be finely divided very easily.

The dried food products produced by the method as disclosed herein have a water content reduced to usually 10 % by weight or less, preferably 3 % by weight or less.

The dried food products produced by the method of this invention can be rapidly reconstituted by allowing them to be simply immersed in water, while the nutrients, smell and taste inherent in the feed materials are kept intact. Therefore, they can not only be used as convenience foods but can also be employed as materials for obtaining a variety of processed foods, for instance, noodles, bread, sausages, dairy products and soup squares.

## Claims

1. A method for producing dried food products capable of returning rapidly to a hydrous, fresh state, which comprises the steps of:
sorting out cleaned feed material in such a manner that it comes within a given shape and size well fit for processing,
further cleaning the thus sorted-out feed material, if required,
bringing said cleaned feed material into contact with liquefied air or nitrogen for instantaneous freezing,
exposing the thus frozen material to an air pressure of at least 300 megapascals in a pressure-resistant, closed vessel, and
holding the thus pressurized, frozen material to dryness in vacuo.

2. A method as claimed in Claim 1, wherein said sorting-out step includes cutting.

3. A method as claimed in Claim 1 or 2, wherein said sorting-out step includes selection.

4. A method as claimed in Claim 1, 2 or 3, wherein said sorting-out step includes classification.

5. A method as claimed in any one of Claims 1-4, wherein said sorting-out step includes sieving.

6. A method as claimed in any one of Claims 1-5, wherein said cleaning step includes washing with water.

7. A method as claimed in Claim 6, wherein said cleaning step includes exposure of said feed material to ultrasonic energy.

8. A method as claimed in Claim 6, wherein said cleaning step includes application of showers of water.

9. A method as claimed in any one of claims 1-8, wherein said instantaneous freezing step is carried out by blowing liquefied air or nitrogen onto said feed material in a tunnel type of equipment.

10. A method as claimed in Claim 1, which additionally includes a pulverization step.

11. A method as claimed in Claim 1, wherein said feed material is such fresh vegetable foods as vegetables, fruits and mushrooms.

12. A method as claimed in Claim 1, wherein said feed material is such animal foods meat e.g. flesh of animals, chicken and fish meat and eggs, e.g. hen's eggs and fish eggs.

13. A method as claimed in Claim 1, wherein said feed material is such processed foods as pasta, noodles and pickles.
